# EUROPEAN PATENT APPLICATION

(11) **EP 1 925 561 A1**
(43) Date of publication of application: **28.05.2008**
(21) Application number: 07120562.9
(22) Date of filing: 13.11.2007
(51) Int. Cl.: B65D 41/34, B65D 41/04

(54) **Liquid containing device, preform and container**

(30) Priority: 23.11.2006 IT MI20062242
(71) Applicant: Capsol Berry Plastics S.p.A., 20044 Colnago, Fraz. di Cornate d'Adda (MI) (IT)
(72) Inventor: Rovelli, Ivan Maria, 20052, Monza (Milano) (IT)
(74) Representative: Pesce, Michele

(57) **Abstract**

A liquid containing device, comprising a container (1) presenting a neck (1A) in which an opening (6) is provided, and a cap (2) wherein said cap presents a plurality of elements (5) projecting from its inner surface, said neck presenting guide elements (4) for engaging said projecting elements to cause said cap (2) to approach said neck (1A) as the result of a relative rotation between the two, at least one stop abutment (7) for said projecting elements (5) to halt the rotation of said cap (2) when it reaches a closed position, and at least one element (3) for locking one of said projecting elements (5) to maintain said cap (2) in a closed position.

## Description

The present invention relates to a liquid containing device in accordance with the introduction to the main claim.

Liquid containers are known presenting on their open neck a thread enabling a closure cap to be screwed onto the neck. This type of closure is very effective for containers presenting an opening of fairly small diameter, for example less than two centimetres.

However in containers with large openings exceeding 2 cm, for example milk containers, this closure method is expensive. This is because a considerable quantity of material has to be used to form the thread, with considerable ongoing material purchase costs and ecological disposal problems. Moreover the container is of considerable weight.

Again, the thread also has to be made on the cap, evidently using much material and increasing its weight.

Lastly, the cap of such bottles is very tall to enable the required number of thread turns to achieve sealed closure. This makes such caps very heavy.

An object of the present invention is therefore to provide a liquid containing device which represents an improvement over the known art.

A further object of the invention is to provide a liquid containing device with lesser material than traditional containers, and hence economical, ecological and of lesser weight than known containers.

Another object of the invention is to provide a containing device with a light and economical cap of reduced height.

These and other objects are attained by a liquid containing device in accordance with the technical teachings of the accompanying claims.

Further characteristics and advantages of the invention will be apparent from the description of a preferred but non-exclusive embodiment of the liquid containing device, illustrated by way of non-limiting example in the accompanying drawings, in which:
Figure 1 is a plan view of a container neck comprising an opening, the container not being shown;
Figure 2 is a perspective view of the container neck of Figure 1;
Figure 3 is a schematic view of a locking element present on the container neck; the same figure also shows schematically a projecting element of the cap in a lead-in and locking position;
Figure 4 shows a guide element provided on the container neck;
Figure 5 shows a cap for closing the opening of Figure 1;
Figure 6 is a section through a preform for the container of the present invention, shown just extracted from a mould and before being blow-moulded; and
Figure 7 and 8 represent different embodiments of the locking elements and of the guide elements of figures 3 and 4.

With reference to said figures, these show a containing device for liquids, in particular milk, in which a container is indicated by 1 and its cap by 2.

An opening 6 is provided in the neck 1A of the container 1 for inserting the contents into the container and for pouring them out. This opening has a diameter of 40 mm, but could be of any value.

On the outside of the container neck a plurality of coupling means are provided for the cap 2, to replace the conventional thread and enable the cap to be "bayonet" fixed onto the container 1.

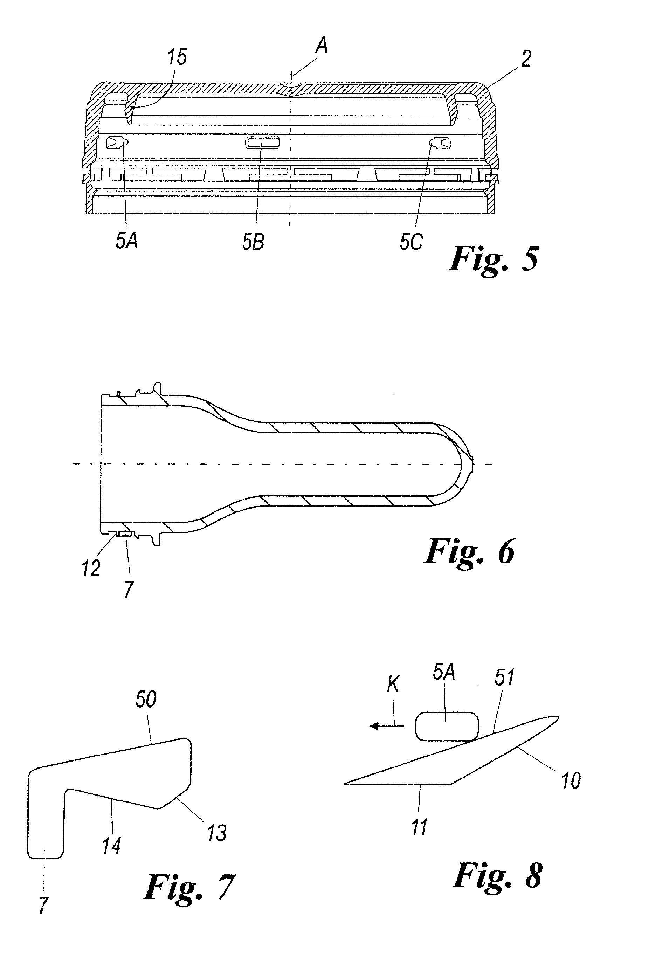

Six projecting elements 5, disposed at the vertices of a hexagon centered on a cap axis A, are provided on the inner surface of the cap 5 (Figure 5). Each projecting element has a parallelepiped shape with bevelled edges and corners.

The container neck 1A presents six elements projecting from its outer surface, specifically four guide elements 4A, 4B, 4C, 4D and two locking elements 3A, B, presenting abutments 7 arranged to halt the cap rotation.

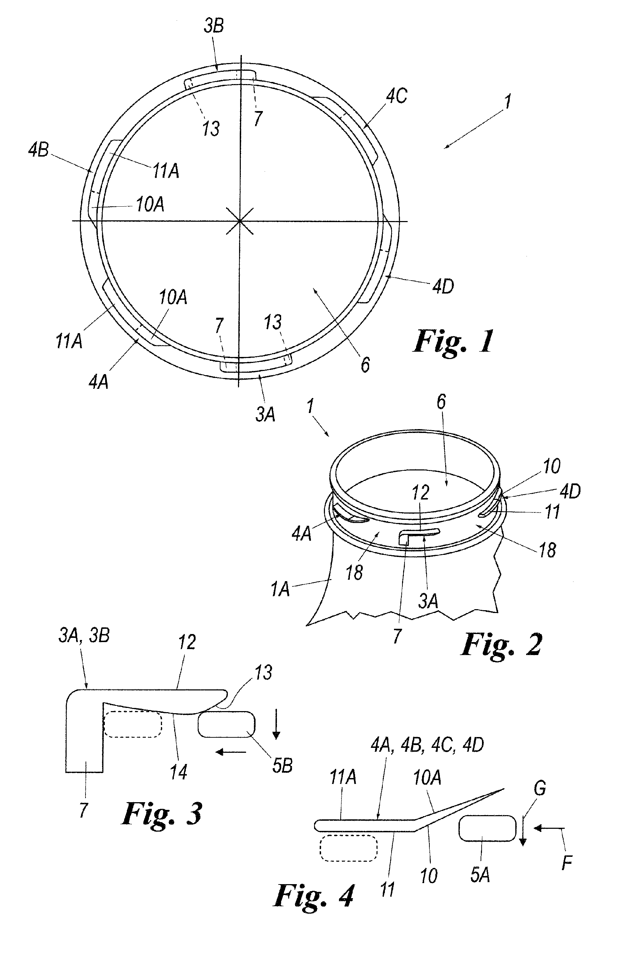

The guide elements 4 are all identical and, as can be seen in Figure 1, are disposed facing each other (4B, 4D and 4A, 4C) in pairs diametrically about the centre of the opening, at four vertices of a hexagon with its centre coinciding with that of the opening.

The locking elements 3A and 3B, which are identical, are disposed facing each other at the remaining two vertices of said hexagon.

Each guide element 4 (well visible in Figure 4) presents a first portion 10 with an inclined lower surface and a second portion 11 with a lower surface substantially parallel to the surface of the opening 6. The first portion presents an inclination acting as a lead-in for one of said projecting elements 5 towards the surface 10, when the cap is subjected to clockwise rotation. The guide element upperly presents a flat surface 11A connected to an inclined surface 10A.

Each locking element 3 (with reference to Figure 3) presents a lower surface provided, from left to right in Figure 3, with a slightly inclined lead-in surface 13, a concave portion 14, and a stop abutment 7.

The operation of the invention is very simple. The cap is rested on the container. If the projecting elements 5 lie superposed on the locking or guide elements, and hence on the horizontal surfaces 11A or 12, a clockwise rotation of the cap urges the projecting elements 5 into the spaces 18 between the locking elements 3 and guide elements 4. If the elements lie superposed on the inclined surface 10A, they slide towards the flat surfaces and the previously described position is attained. If the projecting elements 5 lie in the spaces 18 the cap rests on the opening and closes it. In this respect, an annular projection 15 penetrates into the opening and seals it.

A clockwise rotation of the cap 2 through 1/6 of a revolution (arrow F Figure 4) brings the projecting elements 5 against the inclined surface 10. These, on sliding along this surface, are urged by its inclination in the direction of the arrow G, i.e. in the sense of pulling the cap towards the container, until the projecting element lies in the dashed position of Figure 4.

While a first projecting element cooperates with the guide elements, another projecting element 5B (Figure 3) rests on the locking element 7, the rotation of the cap 2 bringing it firstly against the inclined surface 13. As a result of its rotation and sliding on the lead-in surface 13, this projecting element undergoes slight downward elastic flexure, then immediately afterwards during the cap rotation it recovers its initial position to lie within the concave portion 14 of the locking element 3. The cap rotation halts when the projecting element strikes against the stop abutment 7.

Advantageously the locking elements are located in diametrically opposite positions and are only two in number. In this respect, the abutment stop 7 represents an undercut for opening the mould with which the bottle preform shown in Figure 6 is produced.

In concluding the description of this embodiment, it should be noted that the cap presents a breakable seal to engage in known manner a projection provided on the container neck.

The seal is connected to the cap by a plurality of breakable portions.

The container preform is produced by moulding PET; it is then blow-moulded to obtain the finished container. The cap however is formed from PE or PP.

By way of example it should be noted that the preform of a one litre PET milk bottle with a 38 mm opening with thread has a weight of about 25 grams.

In contrast, a preform of the present invention has a weight of about 21 grams, with evident material and weight saving.

In addition, the weight of the cap of the present invention is 0.5 grams less than the weight of threaded caps.

In an alternative embodiment shown in Figures 7 and 8, the locking elements upperly present an inclined surface 50, 51, which facilitates the sliding of the projecting elements 5 into the spaces 18.

In a further embodiment, the locking elements 3 do not present the stop abutment 7, which is instead provided on two of the guide elements 4, located in diametrically opposite positions (in order not to impede mould opening).

Only some embodiments have been illustrated, others being conceivable using the same inventive concept.

## Claims

1. A liquid containing device, comprising a container (1) presenting a neck (1A) in which an opening (6) is provided, and a cap (2), **characterised in that** said cap presents a plurality of elements projecting (5) from its inner surface, said neck presenting guide elements (4) for engaging said projecting elements to cause said cap (2) to approach said neck (1A) as the result of a relative rotation between the two, at least one stop abutment (7) for said projecting elements (5) to halt the rotation of said cap (2) when it reaches a closed position, and at least one element for locking (3) one of said projecting elements to maintain said cap in a closed position.

2. A device as claimed in claim 1, **characterised in that** said projecting elements (5) are of substantially parallelepiped shape with rounded edges and corners.

3. A device as claimed in claim 1, **characterised in that** said guide elements (4) lowerly present a first portion inclined (10) to said opening and a second portion (11) substantially parallel to said opening (6).

4. A device as claimed in claim 1, **characterised in that** said locking element (3) presents a substantially concave portion (14) to house said projecting elements (5).

5. A device as claimed in claim 4, **characterised in that** said abutment element (7) is provided in said locking element (3) in correspondence with said concave portion (14).

6. A device as claimed in claim 4, **characterised in that** said locking elements (3) present a lead-in portion (13) to facilitate the sliding of said projecting elements (5) into said concave portion (14).

7. A device as claimed in one or more of the preceding claims, **characterised by** comprising six projecting elements (5) on the cap, and four diametrically opposite guide elements (4) and two diametrically opposite locking elements (3) on the neck.

8. A device as claimed in claim 7, **characterised in that** each of said projecting elements (5) on the cap, and each of said guide elements (4) and locking elements (3) on the neck, is positioned at a vertex of a hexagon centered respectively on an axis (A) of the cap and at the centre of said opening (6).

9. A device as claimed in claim 1, **characterised in that** said container presents at said opening an annular projection arranged to engage as an undercut a security seal projecting from a base of said cap (2).

10. A device as claimed in claim 1, **characterised in that** said seal is connected to said cap (2) by a plurality of breakable elements.

11. A device as claimed in claim 1, **characterised in that** said cap (2) presents a sealing rim (15) projecting endlessly from its upper surface and arranged to penetrate into said opening (6) when the cap and container are coupled together.

12. A device as claimed in one or more of the preceding claims, **characterised in that** the locking elements (3) and the guide elements (4) upperly present inclined surface (10A, 50, 51) for urging said projecting elements into the spaces (18) between said guide elements and said locking elements.

13. A container preform, **characterised by** presenting guide elements (4) for engaging the projecting elements (5) of a cap (2), to cause said cap to approach said neck as the result of a relative rotation between the two, at least one stop abutment (7) for said projecting elements to halt the rotation of said cap when it reaches a closed position, and at least one element for locking (3) one of said projecting elements to maintain said cap in a closed position.

14. A container **characterised by** presenting guide elements (4) for engaging the projecting elements (5) of a cap, to cause said cap to approach said neck as the result of a relative rotation between the two, at least one stop abutment (7) for said projecting elements to halt the rotation of said cap when it reaches a closed position, and at least one element for locking (3) one of said projecting elements to maintain said cap in a closed position.
